(19) **Europäisches Patentamt / European Patent Office / Office européen des brevets**

(11) **EP 3 328 159 A1**

(12) **EUROPEAN PATENT APPLICATION**

(43) Date of publication:
**30.05.2018 Bulletin 2018/22**

(51) Int Cl.:
**H05B 33/08** (2006.01)     **H05B 37/02** (2006.01)
**G09G 3/34** (2006.01)

(21) Application number: **16306573.3**

(22) Date of filing: **29.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **Zepeda Salvatierra, Joaquin**
  **35576 Cesson-Sévigné (FR)**
• **Seifi, Mozhdeh**
  **35576 Cesson-Sévigné (FR)**
• **Reinhard, Erik**
  **35576 Cesson-Sévigné (FR)**

(74) Representative: **Huchet, Anne**
**TECHNICOLOR**
**1-5, rue Jeanne d'Arc**
**92130 Issy-les-Moulineaux (FR)**

(54) **METHOD FOR CONTROLLING AUTHORED LIGHT INTENSITY, CORRESPONDING APPARATUS, COMPUTER PROGRAM PRODUCT AND STORAGE MEDIUM**

(57) The present disclosure relates to a method for controlling authored light intensity associated to a multimedia content to be viewed by a user in an authored light multimediarendering system comprising at least one external light source. Such a method comprises controlling a change during time of the authored light intensity from an initial authored light intensity $L_0$ at time $t$ to a target authored light intensity $L_T$ at time $t+1$, with $J = \|L_T - L_0\|$ being greater than a predetermined threshold, the controlling taking into account at least one control parameter $(P_1)$, for delivering, at time $t+1+\delta$, $\delta > 0$, the target authored light intensity $L_T$.

$L_0$     $L_T$

$P_1$ → | Controlling change of authored light intensity | ⟩ 300

**Figure 3a**

## Description

### 1. Technical Field

The field of the disclosure is that of the image and video processing.

More specifically, the disclosure relates to a method for controlling light in an authored light multimedia-rendering system, so as to take account of the user sensitivities regarding light effects.

### 2. Background Art

The approach of the concept of light authoring enables film creators to enhance the color perception of the viewer and emphasize important parts or events in the film. It further enables film creators to extend the viewing screen into the entire room, thus creating a feeling of immersion. Since the approach employs lighting infrastructures already installed in users' homes, this extension can be done with low cost to the user, and hence has the potential for mass adoption.

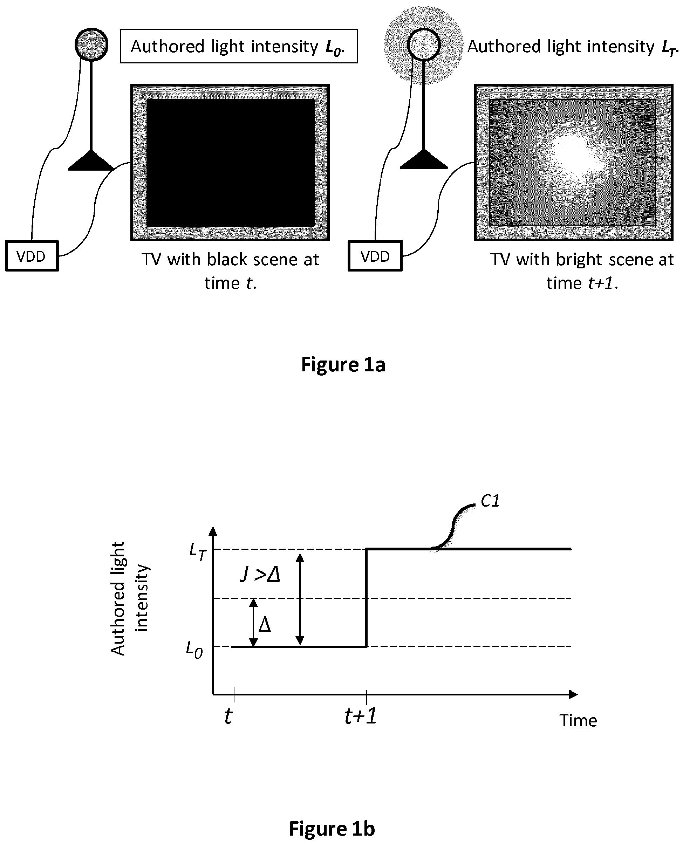

One example of this concept is illustrated in Figure 1a for two consecutive time instants in a film. In this example, the two time instants shown correspond to a change from a very dark scene to a very bright scene, and accordingly the authored lights change from a very low intensity $L_0$ to a very bright intensity $L_T$.

One problem arising in known light authoring is that some users are more sensitive than others to the effect of the authored light. This difference in sensitivities is reminiscent of user sensitivity differences to brightness in television sets. Moreover, for authored light, users can be sensitive rather to abrupt changes in lighting.

Therefore, there is a need for a new method for optimizing authored light by taking account of differences between user sensitivities while preserving the artistic expressiveness of the author.

### 3. Summary of Invention

A particular aspect of the present disclosure relates to a method for controlling authored light intensity associated to a multimedia content to be viewed by a user in an authored light multimedia-rendering system comprising at least one external light source. Such a method comprises controlling a change during time of the authored light intensity from an initial authored light intensity $L_0$ at time $t$ to a target authored light intensity $L_T$ at time $t+1$, with $J = \|L_T - L_0\|$ being greater than a predetermined threshold, the controlling taking into account at least one control parameter $(P_1)$, for delivering, at time $t+1+\delta$, $\delta > 0$, the target authored light intensity $L_T$.

Thus, the present disclosure proposes a new and inventive solution for controlling light in an authored light multimedia-rendering system in a user controlled way, thus optimizing, for each user, the effects of the authored light.

For this, it is proposed allowing a user viewing multimedia content to modulate/control, thanks to one or more control parameters, the lightning effects so as to achieve a better experience without departing from the artist's target.

More precisely, it is proposed that at least one control parameter allows controlling a change in time of the authored light intensity, from an initial light intensity to a target light intensity, so as to obtain a comfortable effect for this change for each user, especially in case of "abrupt" changes (i.e. when the magnitude of the light intensity change is greater than a predetermined threshold). Indeed, according to known techniques of authored light, such situations may lead to discomfort for some users, depending on their sensitivity.

According to one embodiment, the controlling comprises:

- Determining, from the at least one control parameter and at least the target authored light intensity $L_T$, a user profile curve;
- Controlling the change of authored light intensity by applying the user profile curve to the initial authored light intensity $L_0$ for delivering, at time $t+1+\delta$, $\delta > 0$, the target authored light intensity $L_T$.

Thus, according to this embodiment, at least one control parameter, as well as the target authored light intensity, is used to determine a profile curve associated to the user, the user profile curve being next applied to the initial authored light intensity so as to control a change in authored light intensity according to the user sensitivity.

According to another embodiment, the controlling further comprises obtaining the at least one control parameter from the user through an input device in the authored light multimedia-rendering system.

Thus, according to this embodiment, the control parameter(s) is(are) set by the user thanks to an input device of the authored light multimedia-rendering system (for example the video device itself, as for the brightness control setting in currently existing television sets, or another distinct input device connected to the authored light multimedia-rendering system).

For example, the user profile curve presents at least:

- a first part corresponding to an initial discontinuity of magnitude $J_{control}$ from the initial authored light intensity $L_0$ at time $t$ to an intermediate authored light intensity $L_{int}$ at time $t+1$, with $J_{control}$ being smaller than a first control parameter among the at least one control parameter, and $J_{control}$ being smaller than the predetermined threshold;
- a second part corresponding to a smoothly increasing or decreasing curve from the intermediate authored light intensity $L_{int}$ at time $t+1$ to the target authored light intensity $L_T$ at time $t+1+\delta$, $\delta > 0$, the

smoothly increasing or decreasing curve being based on a second control parameter.

Thus, according to this embodiment, the user profile curve is based on:

- a first control parameter corresponding to a magnitude of a light intensity change that is considered as a maximum comfortable magnitude by the user, and
- a second control parameter corresponding to a barely perceivable increasing or decreasing in light intensity, for the user, allowing to gradually reach the target authored light intensity, this second control parameter being predetermined or, for more advanced users, also user-controllable, as the first one.

According to a particular aspect of the present disclosure, the first control parameter corresponds to a maximum comfortable light intensity change $\Delta$ for the user and the second control parameter corresponds to a maximum slope $\alpha$ for the smoothly increasing or decreasing curve.

Thus, according to this embodiment, the perceived "firing" time and temporal span of the effect of the change in authored light intensity is preserved by a discontinuity of magnitude J satisfying J < $\Delta$ while remaining comfortable to a user.

Yet the maximum amplitude of the effect of the change in authored light intensity is reached by a smoothly increasing/decreasing curve following this initial discontinuity, thus preserving artistic expressiveness.

According to an embodiment of the present disclosure, controlling further takes into account a third control parameter corresponding to a scaling factor s to be applied to the authored light intensities.

According to a particular aspect of the present disclosure, the controlling further takes into account at least one adjusting factor ($x^*$) applied to at least one of the control parameters, the at least one adjusting factor ($x^*$) depending on the external light intensity $I$ in the viewing room at the time $t + 1 + d, d>0$ relative to the external light intensity $I_0$ in the viewing room at the time of obtaining the at least one user parameter.

Thus, according to this embodiment, the control parameters $\Delta$, $\alpha$ and s are automatically adjusted depending on the intensity of the light in the room, so as to increase the control of authored light intensity changes.

Indeed, the user sensitivity may depend on the external light intensity in the viewing room, this external light intensity being not only provided by the authored light multimedia-rendering system (i.e. light equipment as wall lamp or table lamp) but also by natural light for example.

For example, the at least one adjusting factor ($x^*$) is defined by a sigmoid curve depending on a relative intensity $I/I_0$.

According to an embodiment of the present disclosure, the at least one adjusting factor ($x^*$) corresponds to the three following adjusting factors: $x_\Delta\left(\frac{I}{I_0}\right)$ for the at least one first control parameter $\Delta$, $x_\alpha\left(\frac{I}{I_0}\right)$ for the second control parameter and $x_s\left(\frac{I}{I_0}\right)$ for the third control parameter.

According to another aspect, the present disclosure also concerns an apparatus for controlling authored light intensity associated to a multimedia content to be viewed by a user in an authored light multimedia-rendering system comprising at least one external light source, comprising:

- a memory; and
- a processor configured for controlling a change during time of the authored light intensity from an initial authored light intensity $L_0$ at time $t$ to a target authored light intensity $L_T$ at time $t+1$, with $J = \|L_T - L_0\|$ being greater than a predetermined threshold, the controlling taking into account at least one control parameter ($P_1$) associated to the user, for delivering, at time $t+1+\delta$, $\delta >0$, the target authored light intensity $L_T$.

The present disclosure also relates to a computer program product comprising program code instructions for implementing the method as mentioned here above, when the program is executed on a computer or a processor.

This program can use any programming language whatsoever and be in the form of source code, object code or intermediate code between source code and object code, such as in a partially compiled form or any other desirable form whatsoever.

The present disclosure also provides a non-transitory computer-readable carrier medium storing instructions for controlling authored light intensity according to any one of the embodiments described in the disclosure. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

The present disclosure also relates to a video device comprising an apparatus for controlling authored light intensity as disclosed here above. Such a video device belongs to a set comprising: a mobile device; a communication device; a game device; a set top box; a TV set; a Blu-Ray disc player; a player; a tablet (or tablet computer); a laptop; a display; a camera and a decoding chip.

## 4. Brief Description of Drawings

Other features and advantages of embodiments shall appear from the following description, given by way of indicative and non-exhaustive examples and from the appended drawings, of which:

- Figures 1a and 1b respectively illustrate an example of authoring light for two consecutive time instants in a film and the light intensity curve related to this example, according to prior art;
- Figure 2 illustrates light intensity curves related to the example of authoring light illustrated in figure 1;
- Figures 3a and 3b are flowcharts of embodiments of the disclosed method;
- Figure 4 illustrates the light intensity curve related to the example of authoring light illustrated in figure 1, according to one embodiment of the disclosed method;
- Figure 5 illustrates an example of a sigmoid curve for adjusting factors according to one embodiment of the disclosed method;
- Figure 6 is a schematic illustration of the structural blocks of an exemplary apparatus that can be used for implementing the disclosed method according to any embodiments disclosed in relation with figures 3 to 5.

## 5. Description of Embodiments

In all of the figures of the present document, the same numerical reference signs designate similar elements and steps.

The general principle of the disclosed method consists in controlling authored light intensity associated to a multimedia content in an authored light multimedia-rendering system by one or more user control parameters so as to optimize, for each user viewing such a multimedia content, the effects of authored light.

In particular, the disclosed method addresses the problem of user sensitivity to changes in lighting while preserving the effects of authored light and artistic expressiveness.

Indeed, as already stated in relation with known solutions for authored light, users can be sensitive rather to abrupt changes in lighting. This situation is illustrated for example in Figure 1 b by the light intensity curve $C1$ that corresponds to the scene changes illustrated in Figure 1 a.

Abrupt changes (curve $C1$) will result in situations where the magnitude $J$ (corresponding to the difference between the target authored light intensity $L_T$ and the initial authored light intensity $L_0$) is greater than a predetermined threshold $\Delta$ and where users may find the effect too strong, depending on their own sensitivity to lighting.

Thus, assuming that $\Delta$ denotes the maximum abrupt change in intensity that a user finds acceptable, authored light changes with magnitude $J>\Delta$ will be uncomfortable to this user.

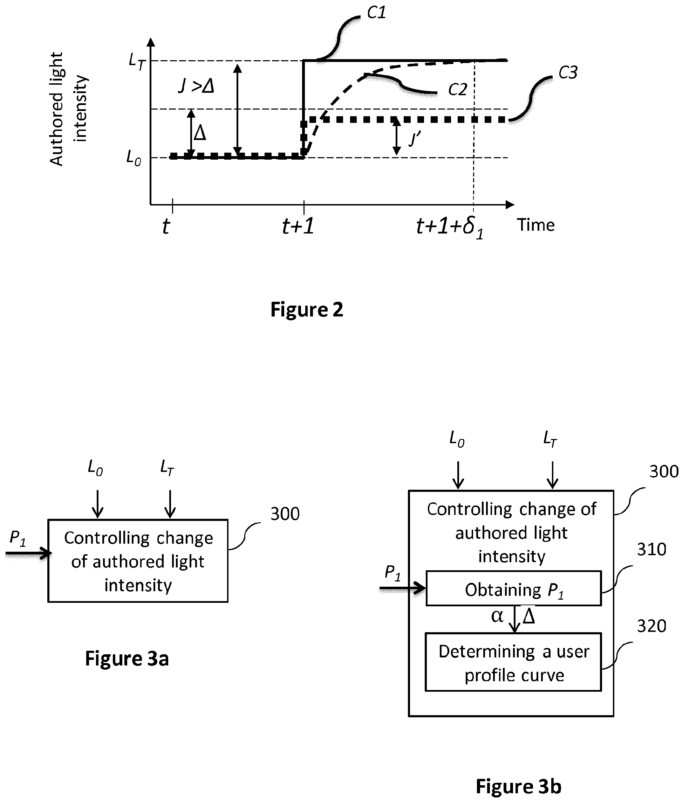

One possible solution to address this problem would have been to make the light change gradual, as illustrated by the dashed curve $C2$, in figure 2. However, one drawback of this solution would be that this effectively shifts the perceived time of the effect from time $t+1$ to time $t+1+\delta_1$, thus increasing its temporal span.

Another possible solution to address this problem of user sensitivity would have been to limit the maximum intensity change to $J'<\Delta$, as illustrated by the dashed curve $C3$, in figure 2. However, this solution leads to reducing the artist's ability to emphasize events in the film, i.e. reducing the scope of possible artistic expressiveness.

For all these reasons, the disclosed method proposes a user-controlled way for optimizing the authored light, thus taking account of user sensitivity while preserving artistic expressiveness.

For that, as illustrated in figure 3a, the disclosed method proposes controlling 300 a change during time of the authored light intensity by taking into account at least one control parameter $P_1$ (also called first control parameter) associated to the user.

Thus, for a change of the authored light intensity from an initial authored light intensity $L_0$ at time $t$ to a target authored light intensity $L_T$ at time $t+1$, and when the absolute difference between these two authored light intensities is greater that a predetermined threshold (i.e. $J = \|L_T - L_0\|$ being greater than a predetermined threshold), controlling 300 delivers, at time $t+ 1+\delta$, $\delta >0$, the target authored light intensity $L_T$ (or a scaled target authored light intensity $sL_T$, with $sL_T < L_T$, as will be described below).

Indeed, using a first control parameter allows optimizing the effect of an abrupt change of authored light intensity (i.e. when the absolute difference of the initial and the target intensities is greater than a threshold) for each user, by taking into account the own sensitivity of each user.

Moreover, given that the comfort level will change from one user to the other, and that sensitivities will also change from day to day even for a single user, the proposed method allows giving users a control for adjusting the strength of the authored light effect.

For example, the predetermined threshold triggering the controlling 300 may be equal to the first control parameter $P_1$.

For that, controlling 300 comprises obtaining 310 the first control parameter $P_1$ associated to the user from a user, for example through an input device in the authored light multimedia-rendering system. The user may for example set this first control parameter $P_1$ on the TV set, as for the brightness control setting, or on a distinct device or apparatus of the authored light multimedia-rendering system. Thus, the user can set this first control parameter each time he is going to view a multimedia content, then taking also account of the light intensity of the viewing room.

Then, controlling 300 comprises determining 320 a user profile curve, at least from the first control parameter previously obtained, and from the target authored light intensity $L_T$ (which is the intensity that should be reached to respect the artistic expressiveness).

According to a first embodiment, the user profile curve may present a predetermined shape using only the first control parameter and the initial and target authored light intensities.

According to another embodiment, the user profile curve may also take into account a second control parameter and thus presents at least the two following parts:

- a first part corresponding to an initial discontinuity of magnitude $J_{control}$ from the initial authored light intensity $L_0$ at time $t$ to an intermediate authored light intensity $L_{int}$ at time $t+1$, with $J_{control}$ being smaller than a first control parameter among said at least one control parameter, and $J_{control}$ being smaller than said predetermined threshold; thus, the perceived "firing" time ($t+1$) and temporal span of the effect is preserved by the discontinuity of amplitude $J_{control}$ satisfying the sensitivity of the user (i.e. $J_{control}$ smaller than a first control parameter) and thus keeping the effect of the light intensity change within the user's range of comfort;
- a second part corresponding to a smoothly increasing or decreasing curve (depending if the drop in light is from low intensity $L_0$ to high intensity $L_T$ or from high intensity $L_T$ to low intensity $L_0$) from the intermediate authored light intensity $L_{int}$ at time $t+1$ to the target authored light intensity $L_T$ at time $t+1+\delta$, $\delta > 0$. This smoothly increasing or decreasing curve may be based on a second control parameter, which can be predetermined or which can correspond to a second control parameter associated to the user (for example for a more advanced user). This second control parameter thus corresponds to a maximum slope $\alpha$ that should be close to the barely perceptible

rate of change of intensity (although it can be greater than this); this second part of the user profile curve thus allows reaching the maximum amplitude of the effect, even at a time later than $t+1$ but close to $t+1$, thus preserving artistic expressiveness.

Thus, the proposed method addresses the problem of user sensitivity while preserving artistic expressiveness by using a user profile curve to be applied to the initial and the target authored light intensities. The proposed method also addresses the shortcomings of the two previously described solutions (and illustrated by curves $C2$ and $C3$ in Figure 2).

As an extra level of control, a scaling factor $0 \leq s \leq 1$ can also be added to the two control parameters. In that case, the delivered target authored light intensity is $sL_T < L_T$, the scaling factor being applied to the initial and target authored light intensities and to the intermediate authored light intensity $L_{int}$. Applying such a scaling factor allows a fine tuning of the user sensitivity while preserving the artistic effect.

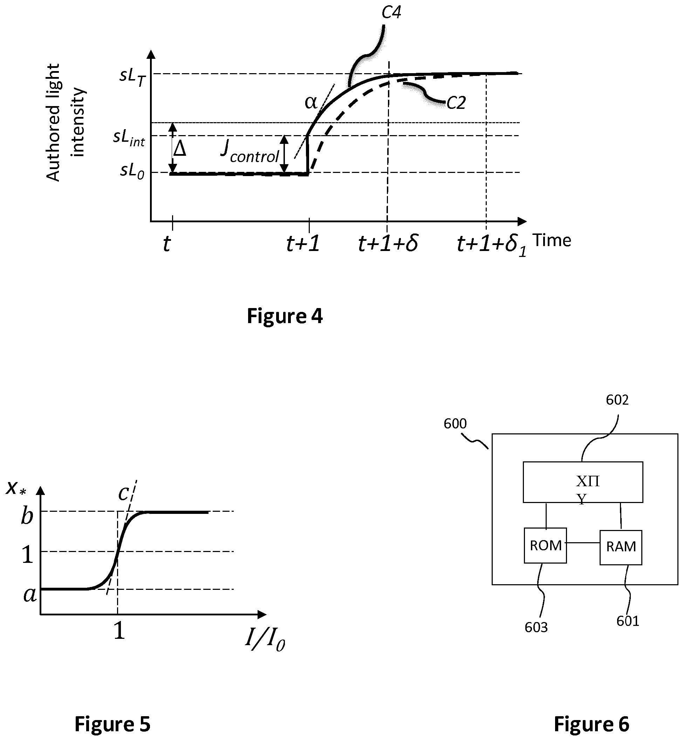

For example, such a user profile curve, including the scaling factor, is illustrated in Figure 4 (curve $C4$), still in the example of the scene changes illustrated in Figure 1 a. This curve $C4$ presents two parts from $t+1$ to $t+1+\delta$, as described here above, with a first part taking account of the first control parameter $\Delta$ corresponding to a maximum comfortable light intensity change for the user, and a second part corresponding to a smoothly increasing curve with a maximum slope $\alpha$ corresponding to the second control parameter.

One can see on this curve $C4$ that the target authored light intensity, with the scaling factor $s$, is reached at time $t+1+\delta$, which is near $t+1$ (and obviously before $t+1+\delta_1$, as for the curve $C2$ described here above in relation to Figure 2), thus preserving the artistic expressiveness, the perceived firing time and temporal span of the effect, while keeping the effect within the user's range of comfort.

According to another embodiment, these control parameters ($\Delta$, $\alpha$ and s) may be automatically adjusted depending on the intensity of light in the viewing room. Accordingly, the values of these parameters would be increased respectively by factors $x_\Delta \left( \frac{I}{I_0} \right)$ (for the first control parameter $\Delta$), $x_\alpha \left( \frac{I}{I_0} \right)$ (for the second control parameter) and $x_s \left( \frac{I}{I_0} \right)$ (for the third control parameter s) that depend on the intensity I of the light in the room relative to the intensity $I_0$ at the time when the user manually set the values of $\Delta$, $\alpha$ and/or s. Such an adjustment of the control parameters allows taking into account changes in light intensities in the room, irrespectively of the authored light. Indeed, the user sensitivity may also be modified because of external parameters like changes in the natural light entering into the viewing room for example.

For example, and as illustrated in Figure 5, a possible curve for these factors $x_* \left( \frac{I}{I_0} \right)$ is a sigmoid, whose parameters a, b and c of the curve need to be set empirically. For example, the parameters could be set by experimentation. First, one possible set of a, b, c values is set (for example as part of the system manufacturing process or, alternatively, periodically updated as part of software patches).

Then, according to the present disclosure, the user is asked to set its preferred control parameters ($\Delta$, $\alpha$ and s), at the time of viewing the multimedia content, and the $I_0$ is recorded. Then the lighting in the room is changed, and the parameters ($\Delta$, $\alpha$ and s) are multiplied by their respective x*. The user is asked to specify whether he is still comfortable with the settings of the system:

> ○ If it is the case, the settings of a ,b ,c are good,
> ○ If it is not the case, another set of parameters a, b and c is set.

Other types of parametric curves could of course be used.

Referring now to Figure 6, we illustrate the structural blocks of an exemplary apparatus that can be used for implementing the method for controlling authored light intensity associated to a multimedia content to be viewed by a user in an authored light multimedia-rendering system according to any of the embodiments disclosed above in relation with figures 3a to 5.

In an embodiment, an apparatus 600 for implementing the disclosed method comprises a non-volatile memory 603 (e.g. a read-only memory (ROM) or a hard disk), a volatile memory 601 (e.g. a random access memory or RAM) and a processor 602 (CPU). The non-volatile memory 603 is a non-transitory computer-readable carrier medium. It stores executable program code instructions, which are executed by the processor 602 in order to enable implementation of the method described above in its various embodiment disclosed in relationship with figures 3a to 5.

Upon initialization, the aforementioned program code instructions are transferred from the non-volatile memory 603 to the volatile memory 601 so as to be executed by the processor 602. The volatile memory 601 likewise includes registers for storing the variables and parameters required for this execution.

All the steps of the above method for controlling authored light intensity associated to a multimedia content to be viewed by a user in an authored light multimedia-rendering system may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or

- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

## Claims

1. Method for controlling authored light intensity associated to a multimedia content to be viewed by a user in an authored light multimedia-rendering system comprising at least one external light source, **characterized in that** it comprises controlling (300) a change during time of said authored light intensity from an initial authored light intensity $L_0$ at time $t$ to a target authored light intensity $L_T$ at time $t+1$, with $J = \|L_T - L_0\|$ being greater than a predetermined threshold, said controlling taking into account at least one control parameter ($P_1$), for delivering, at time $t+ 1+\delta$, $\delta >0$, said target authored light intensity $L_T$.

2. The method according to claim 1, **characterized in that** said controlling comprises:

   > • Determining (320), from said at least one control parameter and at least said target authored light intensity $L_T$, a user profile curve;
   > • Controlling said change of authored light intensity by applying said user profile curve to said initial authored light intensity $L_0$ for delivering, at time $t+ 1+\delta$, $\delta >0$, said target authored light intensity $L_T$.

3. The method according to claim 1 or 2, **characterized in that** said controlling further comprises obtaining (310) said at least one control parameter from the user through an input device in said authored light multimedia-rendering system.

4. The method according to claim 2, **characterized in that** said user profile curve presents at least:

   > • a first part corresponding to an initial discontinuity of magnitude $J_{control}$ from said initial authored light intensity $L_0$ at time $t$ to an intermediate authored light intensity $L_{int}$ at time $t+1$, with

$J_{control}$ being smaller than a first control parameter among said at least one control parameter, and $J_{control}$ being smaller than said predetermined threshold;

• a second part corresponding to a smoothly increasing or decreasing curve from said intermediate authored light intensity $L_{int}$ at time $t+1$ to said target authored light intensity $L_T$ at time $t+1+\delta$, $\delta > 0$, said smoothly increasing or decreasing curve being based on a second control parameter.

5. The method according to claim 4, **characterized in that** said first control parameter corresponds to a maximum comfortable light intensity change $\Delta$ for said user and said second control parameter corresponds to a maximum slope $\alpha$ for said smoothly increasing or decreasing curve.

6. The method according to any of claims 1 to 5, **characterized in that** said controlling further takes into account a third control parameter corresponding to a scaling factor s to be applied to said authored light intensities.

7. The method according to any of claims 1 to 6, **characterized in that** said controlling further takes into account at least one adjusting factor ($x^*$) applied to at least one of said control parameters, said at least one adjusting factor ($x^*$) depending on the external light intensity $I$ in the viewing room at the time $t+1$ relative to the external light intensity $I_0$ in the viewing room at the time of obtaining said at least one user parameter.

8. The method according to claim 7, **characterized in that** said at least one adjusting factor ($x^*$) is defined by a sigmoid curve depending on a relative intensity $I/I_0$.

9. The method according to claim 7 or 8, **characterized in that** said at least one adjusting factor ($x^*$) corresponds to the three following adjusting factors:

$x_\Delta \left( \dfrac{I}{I_0} \right)$ for said at least one first control parameter

$\Delta$, $x_\alpha \left( \dfrac{I}{I_0} \right)$ for said second control parameter and

$x_s \left( \dfrac{I}{I_0} \right)$ for said third control parameter.

10. Apparatus for controlling authored light intensity associated to a multimedia content to be viewed by a user in an authored light multimedia-rendering system comprising at least one external light source, comprising:

• a memory; and
• a processor (602) configured for controlling a change during time of said authored light intensity from an initial authored light intensity $L_0$ at time $t$ to a target authored light intensity $L_T$ at time $t+1$, with $J = \|L_T - L_0\|$ being greater than a predetermined threshold, said controlling taking into account at least one control parameter ($P_1$) associated to said user, for delivering, at time $t+1+\delta$, $\delta > 0$, said target authored light intensity $L_T$.

11. Computer program product **characterized in that** it comprises program code instructions for implementing the method according to at least one of the claims 1 to 9, when said program is executed on a computer or a processor.

12. A non-transitory computer-readable carrier medium storing a computer program product according to claim 11.

13. Video Device **characterized in that** it comprises an apparatus for controlling authored light intensity according to claim 10.

Authored light intensity $L_0$.

Authored light intensity $L_T$.

VDD

TV with black scene at time $t$.

VDD

TV with bright scene at time $t+1$.

**Figure 1a**

Authored light intensity

$L_T$

$J > \Delta$

$\Delta$

$L_0$

$C1$

$t$          $t+1$          Time

**Figure 1b**

EP 3 328 159 A1

**Figure 2**

**Figure 3a**

**Figure 3b**

**Figure 4**

**Figure 5**

**Figure 6**

Europäisches
Patentamt

European
Patent Office

Office européen
des brevets

# EUROPEAN SEARCH REPORT

Application Number

EP 16 30 6573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y<br>A | US 2009/322801 A1 (KWISTHOUT CORNELIS WILHELMUS [NL] ET AL)<br>31 December 2009 (2009-12-31)<br>* paragraph [0024] - paragraph [0056]; figures 2, 3 * | 1,6,8-13<br><br>7<br>4,5 | INV.<br>H05B33/08<br>H05B37/02<br>G09G3/34 |
| X<br><br>Y | US 2010/321284 A1 (KWISTHOUT CORNELIS WILHELMUS [NL])<br>23 December 2010 (2010-12-23)<br>* paragraph [0049] - paragraph [0073]; figure 3 * | 1-3,<br>10-13<br><br>7 | |
| Y | US 2009/219305 A1 (DIEDERIKS ELMO MARCUS ATTILA [NL] ET AL)<br>3 September 2009 (2009-09-03)<br>* paragraph [0082] - paragraph [0116]; figures 6-10 * | 7 | |

TECHNICAL FIELDS
SEARCHED        (IPC)

H05B
G09G

The present search report has been drawn up for all claims

| Place of search | Date of completion of the search | Examiner |
|---|---|---|
| Munich | 27 February 2017 | Beaugrand, Francois |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document

EPO FORM 1503 03.82 (P04C01)

**EP 3 328 159 A1**

## ANNEX TO THE EUROPEAN SEARCH REPORT
## ON EUROPEAN PATENT APPLICATION NO.

EP 16 30 6573

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2017

| Patent document cited in search report | | Publication date | Patent family member(s) | | Publication date |
|---|---|---|---|---|---|
| US 2009322801 | A1 | 31-12-2009 | CN | 101595520 A | 02-12-2009 |
| | | | EP | 2126884 A1 | 02-12-2009 |
| | | | ES | 2543846 T3 | 24-08-2015 |
| | | | JP | 5327750 B2 | 30-10-2013 |
| | | | JP | 2010517091 A | 20-05-2010 |
| | | | US | 2009322801 A1 | 31-12-2009 |
| | | | WO | 2008090506 A1 | 31-07-2008 |
| US 2010321284 | A1 | 23-12-2010 | AT | 512567 T | 15-06-2011 |
| | | | CN | 101529984 A | 09-09-2009 |
| | | | EP | 2077064 A1 | 08-07-2009 |
| | | | JP | 5266559 B2 | 21-08-2013 |
| | | | JP | 2010507888 A | 11-03-2010 |
| | | | US | 2010321284 A1 | 23-12-2010 |
| | | | WO | 2008050281 A1 | 02-05-2008 |
| US 2009219305 | A1 | 03-09-2009 | CN | 1906953 A | 31-01-2007 |
| | | | EP | 1704729 A1 | 27-09-2006 |
| | | | JP | 4698609 B2 | 08-06-2011 |
| | | | JP | 2007525800 A | 06-09-2007 |
| | | | KR | 20070007266 A | 15-01-2007 |
| | | | US | 2009219305 A1 | 03-09-2009 |
| | | | WO | 2005069640 A1 | 28-07-2005 |

EPO FORM P0459

For more details about this annex : see Official Journal of the European Patent Office, No. 12/82